(19)

Europäisches Patentamt
European Patent Office
Office européen des brevets

(11)  **EP 3 524 348 A1**

(12)  **EUROPEAN PATENT APPLICATION**
published in accordance with Art. 153(4) EPC

(43) Date of publication:
**14.08.2019 Bulletin 2019/33**

(21) Application number: **17858464.5**

(22) Date of filing: **05.10.2017**

(51) Int Cl.:
*B01J 35/02* (2006.01)  *B01J 23/75* (2006.01)
*B01J 23/755* (2006.01)  *B01J 27/051* (2006.01)
*B01J 37/34* (2006.01)  *C01B 3/04* (2006.01)
*C01B 3/22* (2006.01)  *C01B 32/198* (2017.01)

(86) International application number:
**PCT/JP2017/036218**

(87) International publication number:
**WO 2018/066628 (12.04.2018 Gazette 2018/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.10.2016  JP 2016197634**

(71) Applicants:
• **Kwansei Gakuin Educational Foundation**
**Nishinomiya-shi, Hyogo 662-8501 (JP)**
• **Fuji Chemical Industries Co., Ltd.**
**Kamiichi-machi**
**Nakaniikawa-gun**
**Toyama 930-0397 (JP)**

(72) Inventors:
• **HASHIMOTO, Hideki**
**Sanda-shi**
**Hyogo 669-1337 (JP)**
• **ISOBE, Kiyoshi**
**Sanda-shi**
**Hyogo 669-1337 (JP)**
• **HORIBE, Tomoko**
**Nakaniikawa-gun**
**Toyama 930-0397 (JP)**
• **SERA, Yoshihiko**
**Nakaniikawa-gun**
**Toyama 930-0397 (JP)**
• **YAMASHITA, Eiji**
**Nakaniikawa-gun**
**Toyama 930-0397 (JP)**

(74) Representative: **Hoffmann Eitle**
**Patent- und Rechtsanwälte PartmbB**
**Arabellastraße 30**
**81925 München (DE)**

(54)  **METAL COMPOUND  GRAPHENE OXIDE COMPLEX**

(57)  Provided is a novel metal compound-graphene oxide composite that can be used for manufacture of hydrogen. A composite of graphene oxide and at least one metal compound selected from the group consisting of cobalt compounds, nickel compounds, and molybdenum compounds, wherein: if the metal compound includes a cobalt compound or a nickel compound, in the infrared absorption spectrum of the complex, absorption derived from C-O groups is present and absorptions derived from O-H groups and C=O groups and absorption derived from bonds between graphene oxide and cobalt or nickel via oxygen atoms are essentially absent; and if the metal compound is a molybdenum compound, in the infrared absorption spectrum of the complex, absorptions derived from C-O groups, O-H groups, and C=O groups, and absorption derived from bonds between graphene oxide and cobalt or nickel via oxygen atoms, are all essentially absent.

**EP 3 524 348 A1**

**Description**

TECHNICAL FIELD

The present invention relates to a metal compound-graphene oxide composite.

BACKGROUND ART

Hitherto, techniques to generate hydrogen from water, alcohols and the like by utilizing light energy such as sunlight have been known, and photocatalysts are used in such techniques (see, for example, Patent Document 1). As photocatalysts, metal oxide semiconductors such as titanium oxide including platinum and the like as promoters, metal complexes including platinum, ruthenium, cobalt, nickel and the like have been known, and techniques to increase the hydrogen generation efficiency by use of these have been extensively studied.

In addition, titanium oxide-molybdenum sulfide semiconductors and graphene oxides supporting nickel compounds and cobalt compounds have been reported as the photocatalysts for hydrogen generation (Non-Patent Document 1 and Non-Patent Document 2, respectively). Further, electrodes for hydrogen generation in which metal cobalt is supported on nitrogen-containing graphene oxide derivatives have been reported (Non-Patent Document 3).

PRIOR ART DOCUMENTS

PATENT DOCUMENT

Patent Document 1: Japanese Unexamined Patent Application Publication No. 2012-245469

NON-PATENT DOCUMENT

Non-Patent Document 1: Advanced Materials, 25, 3820-3839, 2013
Non-Patent Document 2: Scientific Reports, 5, 7629, 2015
Non-patent Document 3: Journal of Materials Chemistry A, 3, 15962-15968, 2015

SUMMARY OF THE INVENTION

PROBLEM TO BE SOLVED BY THE INVENTION

A main object of the present invention is to provide a novel metal compound-graphene oxide composite which can be used in the production of hydrogen. Another object of the present invention is to provide a photocatalyst containing the composite, a method for producing the composite, an apparatus for producing hydrogen which includes the composite as a catalyst, and an electrode which contains the composite and is used for a decomposition reaction of water.

MEANS FOR SOLVING THE PROBLEM

The present inventors have intensively conducted investigations into novel substances having an excellent hydrogen generation efficiency. As a result, it has been found out that hydrogen can be efficiently produced from a hydrogen source such as water when a metal compound-graphene oxide composite which is a composite of at least one metal compound selected from the group consisting of a cobalt compound, a nickel compound, and a molybdenum compound and graphene oxide, in which absorption attributed to a C-O group is present but absorption attributed to an O-H group and a C=O group and absorption attributed to a bond between graphene oxide and cobalt or nickel via an oxygen atom are substantially absent in an infrared absorption spectrum of the composite in a case in which the metal compound includes a cobalt compound or a nickel compound, and absorption attributed to a C-O group, an O-H group, and a C=O group and absorption attributed to a bond between graphene oxide and molybdenum via an oxygen atom are all substantially absent in an infrared absorption spectrum of the composite in a case in which the metal compound is a molybdenum compound, is used as a photocatalyst. The present invention has been completed by further conducting investigations based on these findings.

ADVANTAGES OF THE INVENTION

According to the present invention, it is possible to provide a novel metal compound-graphene oxide composite which can be used in the production of hydrogen. In addition, according to the present invention, it is also possible to provide a photocatalyst containing the composite, a method for producing the composite, an apparatus for producing hydrogen which includes the composite as a catalyst, and an electrode which contains the composite and is used for a decomposition reaction of water.

In other words, the present invention provides inventions of the following aspects.

Item 1. A metal compound-graphene oxide composite which is a composite of at least one metal compound selected from the group consisting of a cobalt compound, a nickel compound, and a molybdenum compound and graphene oxide, in which

absorption attributed to a C-O group is present but absorption attributed to an O-H group and a C=O group and absorption attributed to a bond between graphene oxide and cobalt or nickel via an oxygen atom are substantially absent in an infrared absorption spectrum of the composite in a case in which the metal compound includes a cobalt compound or a nickel compound and

absorption attributed to a C-O group, an O-H group, and a C=O group and absorption attributed to a bond between graphene oxide and molybdenum via an oxygen atom are all substantially absent in an infrared absorption spectrum of the composite in a case in which the metal compound is a molybdenum compound.

Item 2. The metal compound-graphene oxide composite according to Item 1, in which the metal compound has a particle size of 10 nm or less.

Item 3. The metal compound-graphene oxide composite according to Item 1 or 2, in which contents of cobalt, nickel, and molybdenum calculated from an elemental analysis measurement result on a surface of the metal compound-graphene oxide composite by scanning electron microscopy with energy dispersive spectroscopy is from 0.1 to 50 mass%.

Item 4. The metal compound-graphene oxide composite according to any one of Items 1 to 3, in which a primary particle size is 100 $\mu$m or less.

Item 5. The metal compound-graphene oxide composite according to any one of Items 1 to 4, in which the composite substantially does not have a signal based on a crystal of a metal or a metal compound at $2\theta = 30°$ or more in X-ray powder diffraction measurement.

Item 6. The metal compound-graphene oxide composite according to any one of Items 1 to 5, in which the cobalt compound is cobalt oxide, the nickel compound is nickel oxide, and the molybdenum compound is a chalcogen compound of molybdenum.

Item 7. A method for producing a composite of at least one metal compound selected from the group consisting of a cobalt compound, a nickel compound, and a molybdenum compound and graphene oxide, the method including:

a step of preparing a suspension by mixing at least one metal compound raw material selected from the group consisting of a cobalt compound, a nickel compound, and a molybdenum compound and graphene oxide as raw materials in an inert solvent; and

a step of irradiating the suspension with light having a wavelength in a range of from 100 nm to 800 nm.

Item 8. The method for producing a composite according to Item 7, in which

the cobalt compound as a raw material is at least one of a salt of cobalt with an inorganic acid, a salt of cobalt with a carboxylic acid, a salt of cobalt with a sulfonic acid, cobalt hydroxide, a double salt of cobalt, or a complex of cobalt,

the nickel compound as a raw material is at least one of a salt of nickel with an inorganic acid, a salt of nickel with a carboxylic acid, a salt of nickel with a sulfonic acid, nickel hydroxide, a double salt of nickel, or a complex of nickel, and

the molybdenum compound as a raw material is at least one of a salt of molybdenum with an inorganic acid, a salt of molybdenum with carboxylic acid, a salt of molybdenum with a sulfonic acid, molybdenum hydroxide, a double salt of molybdenum, a complex of molybdenum, or a salt of molybdenum with sulfur.

Item 9. A photocatalyst containing the metal compound-graphene oxide composite according to any one of Items 1 to 6.

Item 10. A method for producing hydrogen, including a step of irradiating a hydrogen source containing at least either of water or an alcohol with light in presence of the metal compound-graphene oxide composite according to any one of Items 1 to 6.

Item 11. The method for producing hydrogen according to Item 10, in which at least either of sunlight or light from a white LED is used as the irradiation light. Item 12.

An apparatus for producing hydrogen, including the metal compound-graphene oxide composite according to any one of Items 1 to 6 as a catalyst.

BRIEF DESCRIPTION OF THE DRAWINGS

FIG. 1 is data which illustrates the results of MALDI and FT-ICR-MS analysis for graphene oxide synthesized in the synthesis example.

FIG. 2 is an ultraviolet-visible absorption spectrum of graphene oxide synthesized in the synthesis example.

FIG. 3 is data which illustrates the results of X-ray powder diffraction (XRD) measurement for graphene oxide synthesized in the synthesis example.

FIGs. 4(a) and 4(b) are a photograph and a schematic diagram of an apparatus used for synthesis of a metal compound-graphene oxide composite in the examples.

FIG. 5 is a graph which concurrently illustrates an infrared absorption spectrum (IR: ATR method) of a cobalt compound-graphene oxide composite (Co-GO) obtained in Example 1 and an infrared absorption spectrum (IR: ATR method) of an iron compound-graphene oxide composite (Fe-GO) obtained in the reference example.

FIG. 6 is a graph which concurrently illustrates an infrared absorption spectrum (IR: ATR method) of a nickel compound-graphene oxide composite (Ni-GO) obtained in Example 2 and an infrared absorption spectrum (IR: ATR method) of an iron compound-graphene oxide composite (Fe-GO) obtained in the reference example.

FIG. 7 is a graph which concurrently illustrates an infrared absorption spectrum (IR: ATR method) of a molybdenum compound-graphene oxide composite (Mo-GO) obtained in Example 3 and an infrared absorption spectrum (IR: ATR method) of an iron compound-graphene oxide composite (Fe-GO) obtained in the reference example.

FIG. 8 is a graph which concurrently illustrates an infrared absorption spectrum (IR: ATR method) of graphene oxide (GO) obtained in the synthesis example and an infrared absorption spectrum (IR: ATR method) of an iron compound-graphene oxide composite (Fe-GO) obtained in the reference example.

FIG. 9 is an XRD spectrum of a cobalt compound-graphene oxide composite obtained in Example 1.

FIG. 10 is an XRD spectrum of a nickel compound-graphene oxide composite obtained in Example 2.

FIG. 11 is an XRD spectrum of a molybdenum compound-graphene oxide composite obtained in Example 3.

FIG. 12 is an XRD spectrum of an iron compound-graphene oxide composite obtained in the reference example.

FIG. 13 is a scanning electron micrograph of a cobalt compound-graphene oxide composite obtained in Example 1 (magnification: 500-fold).

FIG. 14 is mapping images of a cobalt atom (Co-L), an oxygen atom (O-K), and a carbon atom (C-K) attained by observing the surface of a cobalt compound-graphene oxide composite obtained in Example 1 by scanning electron microscopy with energy dispersive spectroscopy (SEM/EDX) (magnification: 500-fold).

FIG. 15 is a scanning electron micrograph of a nickel compound-graphene oxide composite obtained in Example 2 (magnification: 1000-fold).

FIG. 16 is mapping images of a nickel atom (Ni-L), an oxygen atom (O-K), and a carbon atom (C-K) attained by observing the surface of a nickel compound-graphene oxide composite obtained in Example 2 by scanning electron microscopy with energy dispersive spectroscopy (SEM/EDX) (magnification: 1000-fold).

FIG. 17 is a scanning electron micrograph of a molybdenum compound-graphene oxide composite obtained in Example 3 (magnification: 1000-fold).

FIG. 18 is mapping images of a molybdenum atom and a sulfur atom (Mo-LA), an oxygen atom (O-K), and a carbon atom (C-K) attained by observing the surface of a molybdenum compound-graphene oxide composite obtained in Example 3 by scanning electron microscopy with energy dispersive spectroscopy (SEM/EDX) (magnification: 1000-fold).

FIG. 19 is transmission electron micrographs of a cobalt compound-graphene oxide composite obtained in Example 1 (the images measured at four magnifications are concurrently illustrated, and the scale bars in the upper left micrograph, the upper right micrograph, the lower left micrograph, and the lower right micrograph are 0.2 $\mu$m, 20 nm, 10 nm, and 2 nm, respectively).

FIG. 20 is a TEM image (BF) and mapping images of a cobalt atom (Co K), an oxygen atom (O K), and a carbon atom (C K) attained by observing the surface of a cobalt compound-graphene oxide composite obtained in Example 1 by transmission electron microscopy with energy dispersive spectroscopy (TEM/EDX).

FIG. 21 is transmission electron micrographs of a nickel compound-graphene oxide composite obtained in Example 2 (the images measured at four magnifications are concurrently illustrated, and the scale bars in the upper left micrograph, the upper right micrograph, the lower left micrograph, and the lower right micrograph are 0.2 $\mu$m, 20 nm, 10 nm, and 2 nm, respectively).

FIG. 22 is a TEM image (BF) and mapping images of a nickel atom (Ni K), an oxygen atom (O K), and a carbon atom (C K) attained by observing the surface of a nickel compound-graphene oxide composite obtained in Example 2 by transmission electron microscopy with energy dispersive spectroscopy (TEM/EDX).

FIG. 23 is a photograph of an apparatus used for hydrogen production in the examples.

FIG. 24 is a graph attained by plotting the relation between a light irradiation time and a total amount of hydrogen generated in a hydrogen production example (Example 4) using a cobalt compound-graphene oxide composite obtained in Example 1 or an iron compound-graphene oxide composite obtained in the reference example.

FIG. 25 is a graph attained by plotting the relation between a light irradiation time and a total amount of hydrogen generated in a hydrogen production example (Example 4) using a nickel compound-graphene oxide composite obtained in Example 2 or an iron compound-graphene oxide composite obtained in the reference example.

FIG. 26 is a graph attained by plotting the relation between a light irradiation time and a total amount of hydrogen generated in a hydrogen production example (Example 4) using a molybdenum compound-graphene oxide composite obtained in Example 3 or an iron compound-graphene oxide composite obtained in the reference example.

EMBODIMENTS OF THE INVENTION

1. Metal compound-graphene oxide composite

The metal compound-graphene oxide composite of the present invention is a composite of at least one metal compound selected from the group consisting of a cobalt compound, a nickel compound, and a molybdenum compound and graphene oxide. Furthermore, in the metal compound-graphene oxide composite of the present invention, absorption attributed to a C-O group is present but absorption attributed to an O-H group and a C=O group and absorption attributed to a bond between graphene oxide and cobalt or nickel via an oxygen atom are substantially absent in an infrared absorption spectrum of the composite in a case in which the metal compound includes a cobalt compound or a nickel compound, and absorption attributed to a C-O group, an O-H group, and a C=O group and absorption attributed to a bond between graphene oxide and molybdenum via an oxygen atom are all substantially absent in an infrared absorption spectrum of the composite in a case in which the metal compound is a molybdenum compound. Hereinafter, the metal compound-graphene oxide composite of the present invention will be described in detail.

In the metal compound-graphene oxide composite of the present invention, the metal compound (hereinafter, meaning at least one of a cobalt compound, a nickel compound, or a molybdenum compound) is preferably in the form of extremely fine particles. In addition, the metal compound particles are preferably uniformly dispersed in and supported on graphene oxide. The metal compound contained in the metal compound-graphene oxide composite of the present invention may be of one kind or of two or more kinds.

The particle size of the metal compound supported on graphene oxide is preferably 10 nm or less, more preferably 5 nm or less, still more preferably 4 nm or less, and particularly preferably 3 nm or less from the viewpoint of increasing the hydrogen production efficiency. The lower limit value of the particle size of the metal compound is, for example, 0.5 nm or 1 nm. Incidentally, the particle size of the metal compound in the metal compound-graphene oxide composite of the present invention is a value estimated by observing the metal compound particles by transmission electron microscopy with energy dispersive spectroscopy (TEM/EDX) and the like.

The cobalt compound contained in the metal compound-graphene oxide composite of the present invention is not particularly limited, but examples thereof may include preferably cobalt oxide and more preferably cobalt oxide containing a divalent cobalt ion and cobalt oxide containing a trivalent cobalt ion (for example, $CoO$ and $Co_2O_3$ are assumed) from the viewpoint of increasing the hydrogen production efficiency. The cobalt compound contained in the metal compound-graphene oxide composite may be of one kind or of two or more kinds.

The nickel compound contained in the metal compound-graphene oxide composite of the present invention is not particularly limited, but examples thereof may include preferably a nickel oxide and more preferably an oxide containing a divalent nickel ion and an oxide containing a trivalent nickel ion (for example, $NiO$ and $Ni_2O_3$ are assumed) from the viewpoint of increasing the hydrogen production efficiency. The nickel compound contained in the metal compound-graphene oxide composite may be of one kind or of two or more kinds.

The molybdenum compound contained in the metal compound-graphene oxide composite of the present invention is not particularly limited, but examples thereof may include preferably a molybdenum chalcogenide (for example, $MoO_2$, $MoO_3$, and $MoS_2$ are assumed) from the viewpoint of increasing the hydrogen production efficiency. The molybdenum compound contained in the metal compound-graphene oxide composite may be of one kind or of two or more kinds.

Incidentally, the metal compound-graphene oxide composite of the present invention may contain a metal simple substance (for example, a cobalt metal, a nickel metal, or a molybdenum metal) in addition to the metal compound.

In the metal compound-graphene oxide composite of the present invention, the content of the metal compound is not particularly limited. The content of each of cobalt and nickel and molybdenum (as total) to be calculated from the elemental analysis measurement result on the surface of the metal compound-graphene oxide composite by scanning electron microscopy with energy dispersive spectroscopy is preferably from 0.1 to 50 mass%, more preferably from 0.5 to 50 mass%, and still more preferably from 2 to 50 mass% from the viewpoint of increasing the hydrogen production efficiency using the metal compound-graphene oxide composite of the present invention.

The graphene oxide contained in the metal compound-graphene oxide composite of the present invention is an oxide of graphene. As the graphene oxide, for example, a commercially available product or one produced by oxidizing graphite or graphene can be used, and one produced by oxidizing graphite (for example, one produced by oxidizing graphite using sulfuric acid, potassium permanganate, or the like) is preferable.

As commercially available products of graphene oxide, for example, those sold as a graphene oxide powder, oxidized graphene, reductively oxidized graphene, a graphene nano-powder having a high specific surface area can be used, and specifically, those commercially available from Sigma-Aldrich Co. and the like can be used. Incidentally, a trace amount of sulfur is present in the graphene oxide obtained in the case of oxidizing graphite using sulfuric acid. Hence, a trace amount of sulfur is usually present in the metal compound-graphene oxide composite produced using the graphene oxide as well. The metal compound-graphene oxide composite of the present invention may contain sulfur.

As graphite to be used in the production of graphene oxide, any graphite may be used as long as it is suitable for the composite of the present invention. As the shape of graphite, for example, spherical graphite, granular graphite, scaly graphite, squamous graphite, and powdered graphite can be used, and it is preferable to use scaly graphite or squamous graphite from the viewpoint of ease of supporting the metal compound and of catalytic activity. Specifically, commercially available ones such as powdered graphite manufactured by NACALAI TESQUE, INC. and graphene nano-powder having a high specific surface area manufactured by EM Japan Co., Ltd. can be used. The primary particle size of the graphite is preferably about from 0.1 to 100 $\mu$m, more preferably about from 0.5 to 80 $\mu$m, and still more preferably about from 2 to 40 $\mu$m.

The primary particle size of the metal compound-graphene oxide composite of the present invention substantially corresponds to the primary particle size of graphene oxide. Accordingly, in the metal compound-graphene oxide composite of the present invention, the primary particle size of graphene oxide is preferably about from 0.1 to 100 $\mu$m, more preferably about from 0.5 to 80 $\mu$m, and still more preferably about from 2 to 40 $\mu$m. In addition, the primary particle size of the metal compound-graphene oxide composite of the present invention is preferably about from 0.1 to 100 $\mu$m, more preferably about from 0.5 to 80 $\mu$m, and still more preferably about from 2 to 40 $\mu$m. The metal compound-graphene oxide composite of the present invention usually has a layered structure. The particle sizes of these can be confirmed using a scanning electron microscope (SEM) photograph.

The composition formula of graphene oxide can be expressed by, for example, $[C_xO_yH_z]_k$. Here, it is preferable that x is from 5 to 12, y is from 2 to 8, z is from 2 to 10, and k is from 8 to 15 and it is more preferable that x is from 6 to 10, y is from 3 to 6, z is from 2 to 5, and k is from 10 to 13.

In addition, the molecular weight of graphene oxide is preferably about from 500 to 5000, more preferably about from 800 to 4000, still more preferably about from 1500 to 3000, and particularly preferably about from 2000 to 2500.

In the metal compound-graphene oxide composite of the present invention, the metal compound particles having a nano size (for example, 10 nm or less) are usually supported on graphene oxide having a micron size (for example, from 0.1 to 100 $\mu$m) and these primary particles are aggregated to form a particle state.

In the metal compound-graphene oxide composite of the present invention, absorption attributed to a C-O group is present but absorption attributed to an O-H group and a C=O group and absorption attributed to a bond between graphene oxide and cobalt or nickel via an oxygen atom are substantially absent in the infrared absorption spectrum of the composite in a case in which the metal compound includes a cobalt compound or a nickel compound. In addition, absorption attributed to a C-O group, an O-H group, and a C=O group and absorption attributed to a bond between graphene oxide and molybdenum via an oxygen atom are all substantially absent in the infrared absorption spectrum of the composite in a case in which the metal compound is a molybdenum compound.

More specifically, in the metal compound-graphene oxide composite of the present invention, absorption (broad absorption at from 3800 cm$^{-1}$ to 3000 cm$^{-1}$) attributed to an O-H group (hydroxyl group) and absorption (absorption at around 1700 cm$^{-1}$) attributed to a C=O group (carbonyl group) are substantially absent even when the metal compound is any of a cobalt compound, a nickel compound, or a molybdenum compound. In addition, absorption (from 700 to 500 cm$^{-1}$) attributed to a bond between graphene oxide and cobalt, nickel, or molybdenum via an oxygen atom is substantially absent. In the present invention, it is desirable that absorption attributed to a bond between graphene oxide and cobalt, nickel, or molybdenum via an oxygen atom has a peak intensity to an extent to which it is evaluated that a bond between graphene oxide and cobalt via an oxygen atom, a bond between graphene oxide and nickel via an oxygen atom, and a bond between graphene oxide and molybdenum via an oxygen atom are each absent in the infrared absorption spectrum.

Furthermore, in the metal compound-graphene oxide composite of the present invention, absorption (at around from 930 to 1310 cm$^{-1}$) attributed to a C-O group is present in a case in which the metal compound includes a cobalt compound or a nickel compound. Meanwhile, absorption (at around from 930 to 1310 cm$^{-1}$) attributed to a C-O group is substantially absent in a case in which the metal compound is a molybdenum compound.

Incidentally, absorption attributed to a hydroxyl group or a carbonyl group may be slightly present in a case in which the infrared absorption spectrum of the metal compound-graphene oxide composite of the present invention is measured. In other words, in the present invention, the phrase "the absorption described above is substantially absent" means that the relative ratio of the peak heights of these absorptions to the peak height of absorption attributed to a C-O group is 0.1 or less. Incidentally, in a case in which the metal compound is a molybdenum compound, the phrase "the absorption described above is substantially absent" is desirably that absorption attributed to a C-O group, an O-H group, a C=O group, or a bond between graphene oxide and molybdenum via an oxygen atom has a peak intensity to an extent to which the absorption is evaluated to be absent in the infrared absorption spectrum.

Furthermore, it is preferable that the metal compound-graphene oxide composite of the present invention substantially does not have a signal based on the crystal of a metal or a metal compound at $2\theta = 30°$ or more in the X-ray powder diffraction measurement. As the metal compound-graphene oxide composite of the present invention does not have the signal at $2\theta = 30°$ or more, it can be said that crystals of a metal or a metal compound are substantially absent and the metal compound is present as extremely fine particles having a nanometer size in the composite. Incidentally, in the present invention, the phrase "the composite substantially does not have a signal" means that a signal to be evaluated so that crystals of a metal or a metal compound are present in the case of observing the XRD spectrum attained by X-ray powder diffraction measurement is absent.

The method for producing a metal compound-graphene oxide composite of the present invention is not particularly limited, but for example, the composite can be produced by the method to be described in the section of "2. Method for producing metal compound-graphene oxide composite" below.

2. Method for producing metal compound-graphene oxide composite

The method for producing a metal compound-graphene oxide composite of the present invention includes the following Step 1 and Step 2. Hereinafter, the production method of the present invention will be described in detail. Step 1: a step of preparing a suspension by mixing at least one metal compound raw material selected from the group consisting of a cobalt compound, a nickel compound, and a molybdenum compound and graphene oxide as raw materials in an inert solvent. Step 2: a step of irradiating the suspension with light having a wavelength in a range of from 100 nm to 800 nm.

(Step 1)

Step 1 is a step of preparing a suspension by mixing at least one metal compound raw material selected from the group consisting of a cobalt compound, a nickel compound, and a molybdenum compound and graphene oxide as raw materials in an inert solvent.

In Step 1, the cobalt compound, the nickel compound, and the molybdenum compound used as a metal compound raw material are not particularly limited as long as the compounds can form the metal compound-graphene oxide composite described above through Step 2 to be described later. The metal compound raw materials may be used singly or in combination of two or more kinds thereof.

Specific examples of the cobalt compound as a raw material may include a salt of cobalt with an inorganic acid, a salt of cobalt with a carboxylic acid, a salt of cobalt with a sulfonic acid, cobalt hydroxide, a double salt of cobalt, and a complex of cobalt. Preferable examples thereof may include cobalt(II) acetate and cobalt(II) chloride. The cobalt compounds as a raw material may be used singly or in combination of two or more kinds thereof.

Specific examples of the nickel compound as a raw material may include a salt of nickel with an inorganic acid, a salt of nickel with a carboxylic acid, a salt of nickel with a sulfonic acid, nickel hydroxide, a double salt of nickel, and a complex of nickel. Preferable examples thereof may include nickel(II) acetate and nickel(II) chloride. The nickel compounds as a raw material may be used singly or in combination of two or more kinds thereof.

Specific examples of the molybdenum compound as a raw material may include a salt of molybdenum with sulfur, a salt of molybdenum with an inorganic acid, a salt of molybdenum with carboxylic acid, a salt of molybdenum with a sulfonic acid, molybdenum hydroxide, a double salt of molybdenum, and a complex of molybdenum. Preferable examples thereof may include ammonium thiomolybdate and molybdenum hexacarbonyl. The molybdenum compounds as a raw material may be used singly or in combination of two or more kinds thereof.

In addition, as graphene oxide, those described in the section of " 1. Metal compound-graphene oxide composite" can be used.

The mixing ratio of the metal compound raw material to graphene oxide is not particularly limited and can be appropriately set depending on the intended composition of the metal compound-graphene oxide composite. For example, about 100 parts by mass of the metal compound raw material may be used with respect to 100 parts by mass of graphene oxide from the viewpoint of setting the content of cobalt, nickel, and molybdenum to be calculated from the elemental analysis measurement result on the surface of the metal compound-graphene oxide composite by scanning electron microscopy with energy dispersive spectroscopy to from 0.1 to 50 mass% as described above.

The inert solvent is not particularly limited, but examples thereof may include ethers such as diethyl ether, tetrahydrofuran, and dioxane; alcohols such as methanol, ethanol, and isopropyl alcohol; esters such as ethyl acetate and propyl acetate; amides such as dimethylformamide and dimethylacetamide; sulfoxides such as dimethylsulfoxide; water; or any mixed solvent thereof, and preferable examples thereof may include ethers, alcohols, amides, water, or any mixed solvent thereof, and still more preferable examples thereof may include tetrahydrofuran, ethanol, dimethylformamide, water, or any mixed solvent of one or more thereof.

(Step 2)

Step 2 is a step of irradiating the suspension prepared in Step 1 with light having a wavelength in a range of from 100 nm to 800 nm. In Step 2, the suspension may be irradiated with light having a wavelength in a range of from 100 nm to 800 nm, more specifically with light including ultraviolet light, and furthermore only with ultraviolet light or may be irradiated with light having other wavelengths such as visible light and infrared light. In other words, among light having a wavelength in a range of from 100 nm to 800 nm, light including ultraviolet light is preferable, light including light having other wavelengths such as visible light and infrared light in addition to ultraviolet light is also preferable, and light including only ultraviolet light is also preferable. Moreover, the suspension may be further irradiated with light having a wavelength out of the above range in addition to light having a wavelength in a range of from 100 nm to 800 nm. Specific examples of light which can be actually used in this step may include light from a mercury lamp (for example, light from a high pressure mercury lamp).

The wavelength of the light with which the suspension is irradiated in Step 2 is about from 100 to 800 nm and preferably about from 180 to 600 nm, and it is desirable that the wavelength of light is in such a range and the light includes light having a wavelength of ultraviolet light.

In addition, in Step 2, the temperature at which the suspension is irradiated with light having a wavelength in a range of from 100 nm to 800 nm and the reaction thus proceeds may be appropriately adjusted depending on the wavelength of light, irradiation time, and the like, but it is usually about from 0 °C to 50 °C, preferably about from 10 °C to 30 °C, and more preferably from 20 °C to 30 °C.

In addition, in Step 2, the time during which the suspension is irradiated with light having a wavelength in a range of from 100 nm to 800 nm may be appropriately adjusted depending on the wavelength of light, temperature, and the like, but it is usually about from 1 minute to 24 hours, preferably about from 10 minutes to 10 hours, and more preferably about from 30 minutes to 5 hours.

By step 2, the metal compound-graphene oxide composite of the present invention is formed in the suspension.

In the production method of the present invention, it is preferable that Step 1 and Step 2 are carried out in an atmosphere of an inert gas (for example, nitrogen gas or argon gas).

In the production method of the present invention, a step of isolating the metal compound-graphene oxide composite obtained may be further included after Step 2. The isolation step can be carried out by a conventional method. For example, the metal compound-graphene oxide composite obtained can be isolated through filtration, washing, and drying.

3. Application of metal compound-graphene oxide composite

(1) Application as photocatalyst

By using the metal compound-graphene oxide composite of the present invention as a photocatalyst, it is possible to produce hydrogen from a hydrogen source such as water or ethanol.

In the case of using the metal compound-graphene oxide composite of the present invention as a photocatalyst, hydrogen can be produced, for example, by a method of irradiating a hydrogen source containing at least either of water or an alcohol with light in the presence of a photocatalyst containing the metal compound-graphene oxide composite.

Examples of the hydrogen source to be a raw material in the hydrogen production may include at least either of water or an alcohol. Specific examples of the hydrogen source may include water, alcohols such as methanol, ethanol, and propanol, or any mixture thereof, preferable examples thereof may include water, ethanol, and any mixture thereof, and particularly preferable examples thereof may include water. In addition, examples of water may include tap water, distilled water, ion exchanged water, pure water, and industrial water, and preferable examples thereof may include tap water, distilled water, and industrial water the like. The hydrogen sources may be used singly or in mixture of two or more kinds thereof.

Examples of the light for irradiation may include sunlight, light from a white LED, light from a fluorescent lamp, and light from a mercury lamp (for example, light from a high pressure mercury lamp), and preferable examples thereof may include sunlight and light from a white LED. The light for irradiation may be used singly or in mixture of two or more kinds thereof.

The proportion of the photocatalyst to the hydrogen source which is a raw material in the hydrogen production is usually about from 0.0001 to 5 mass%, preferably about from 0.001 to 1 mass%, and more preferably about from 0.01 to 0.1 mass%.

The metal compound-graphene oxide composite of the present invention may be dispersed in the hydrogen source or may be present in the hydrogen source, for example, by being supported on a carrier. As an aspect of supporting the metal compound-graphene oxide composite on a carrier, the composite may be supported on, for example, a transparent plate or the like made of glass, plastic or the like as a carrier using a resin-based adhesive or the like.

In the production of hydrogen, for example, a reaction auxiliary such as a photosensitizer or an electron donor may be used in addition to the metal compound-graphene oxide composite of the present invention and the hydrogen source containing at least either of water or an alcohol.

As the photosensitizer to be used as a reaction auxiliary, a known photosensitizer can be used. Examples of the photosensitizer may include aromatic hydrocarbon-based coloring matters (for example, coumarin, fluorescein, dibromofluorescein, eosin Y, eosin B, erythrosin B, rhodamine B, rose bengal, crystal violet, malachite green, auramine O, acridine orange, brilliant cresyl blue, neutral red, thionine, methylene blue, orange II, indigo, alizarin, pinacyanol, berberine, tetracycline, purpurine, and thiazole orange), pyrylium salt-based coloring matters (for example, pyrylium, thiopyrylium, and selenopyrylium), cyanine-based coloring matters, oxonol-based coloring matters, merocyanine-based coloring matters, triaryl carbonium-based coloring matters, and the like); fullerene derivatives (for example, fullerene hydroxide, aminobutyric acid derivatives of fullerene, aminocaproic acid derivatives of fullerene, and carboxylic acid derivatives of fullerene, diethyl bis malonate derivatives of fullerene, and ethyl bis malonate derivatives of fullerene); porphyrin, phthalocyanine analogues (for example, photofrin, laserphyrin, visudyne, hematoporphyrin, deuteroporphyrin IX-2,4-di-acrylic acid, deuteroporphyrin IX-2,4-di-sulfonic acid, 2,4-diacetyl deuteroporphyrin IX, TSPP, phthalocyanine tetracarboxylic acid, phthalocyanine di-sulfonic acid, phthalocyanine tetra-sulfonic acid, and metal complexes of these with zinc, copper, cadmium, cobalt, magnesium, aluminum, platinum, palladium, gallium, germanium, silica, tin and the like); and metal complex-based coloring matters (for example, ruthenium-bipyridine complex, ruthenium-phenanthroline complex, ruthenium-bipyrazine complex, ruthenium-4,7-diphenylphenanthroline complex, ruthenium-diphenyl-phenanthroline-4,7-disulfonate complex, platinum-dipyridylamine complex, and palladium-dipyridylamine complex). Among these, preferable examples of the photosensitizer may include fluorescein and dibromofluorescein and more preferable examples thereof may include fluorescein. The photosensitizers may be used singly or in combination of two or more kinds thereof.

The amount of the photosensitizer used is preferably about from 0.1 to 100 parts by mass and more preferably from 1 to 10 parts by mass with respect to 1 part by mass of the photocatalyst.

In addition, the electron donor is a compound capable of donating electrons to the photosensitizer described above, examples thereof may include triethylamine, triethanolamine, ethylenediaminetetraacetic acid (EDTA), and ascorbic acid, and preferable examples thereof may include triethylamine and triethanolamine. The electron donors may be used singly or in combination of two or more kinds thereof.

The amount of the electron donor used is, for example, preferably about from 10 to 1,000 parts by mass and more preferably about from 100 to 750 parts by mass with respect to 1 part by mass of the photocatalyst.

The reaction temperature is, for example, about from 0 °C to 60 °C and more preferably about from 20 °C to 50 °C. In addition, hydrogen is continuously produced while the photocatalyst is irradiated with light, and the photocatalyst may be irradiated with light depending on the time for hydrogen production.

The produced hydrogen can be continuously discharged to the outside through a gas discharging pipe or the like, and hydrogen can be thus placed in a cylinder or the like, stored, transported and the like if necessary.

By using the metal compound-graphene oxide composite of the present invention as a catalyst, an apparatus for producing hydrogen which includes this can be suitably obtained.

(2) Application as active ingredient of electrode

In addition, the metal compound-graphene oxide composite of the present invention can also be used as an electrode material. An electrode containing the electrode material can be produced by a conventional method.

The electrode of the present invention may be substantially composed only of the metal compound-graphene oxide composite of the present invention (the composite may be substantially contained as an active ingredient), or the surface of the electrode may be composed of the composite of the present invention and the interior thereof may be composed of other metals and the like.

Furthermore, the size, shape, and the like of the electrode of the present invention can be the same as those of the known (hydrogen generating) electrode, and the electrode of the present invention can be used as a substitute for the known electrode to be used for the electrolysis of water.

Furthermore, the (hydrogen generating) electrode of the present invention can be produced at low cost and the hydrogen generation efficiency thereby is also high, it is thus possible to drastically decrease the cost of hydrogen production.

EXAMPLES

Hereinafter, the present invention will be described more specifically with reference to examples, but the present invention is not limited thereto.

[Synthesis Example] Synthesis of graphene oxide

Concentrated sulfuric acid (95% to 98%, 133 cm$^3$) and graphite (graphite flakes, manufactured by NACALAI TESQUE, INC.) (1.01 g) were added into a 500 cm$^3$ single-necked flask and stirred at room temperature (about 20 °C) for 15 minutes. Next, KMnO$_4$ (1.04 g) was added thereto, and the mixture was stirred at room temperature (about 20 °C) for about one day. Further, KMnO$_4$ (1.03 g) was added thereto, and the mixture was stirred at room temperature (about 20 °C) for about 1 day. Furthermore, KMnO$_4$ (1.04 g) was added thereto, and the mixture was stirred at room temperature (about 20 °C) for about one day. Finally, KMnO$_4$ (1.03 g) was added thereto, and the mixture was stirred at room temperature (about 20 °C) for about 1 day, thereby obtaining a light purple suspension.

Next, ice (100 cm$^3$) was placed in a beaker, and the light purple liquid was gradually poured thereinto. Further, a 30% aqueous H$_2$O$_2$ solution was gradually added thereto until the light purple color changed to light green while cooling this beaker in an ice bath. The suspension thus obtained was placed in a centrifuge tube in portions and centrifuged (2600 $\times$ g, 3 hours). The supernatant was removed, and the precipitate was washed with water and then centrifuged (2600 $\times$ g, 30 minutes). The supernatant was removed, and the precipitate was washed with a 5% aqueous HCl solution and then centrifuged (2600 $\times$ g, 30 minutes). In the same manner, the supernatant was removed, and the precipitate was washed with ethanol and then centrifuged (2600 $\times$ g, 30 minutes). Furthermore, the supernatant was removed, and the precipitate was washed with ethanol and then centrifuged (2600 $\times$ g, 30 minutes). Finally, the supernatant was removed, and the precipitate was washed with diethyl ether, then filtered, and dried in a desiccator under reduced pressure, thereby obtaining graphene oxide as a brown solid (yield: 1.80 g).

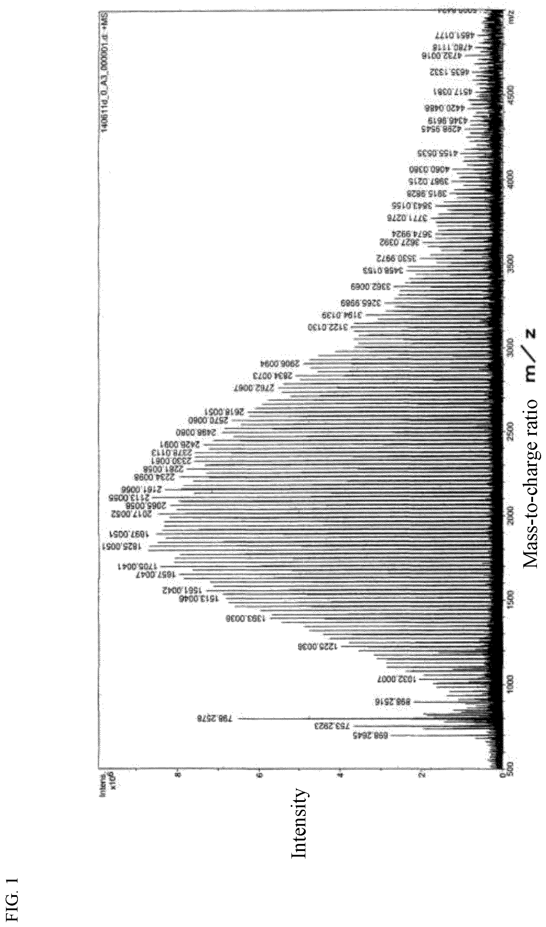

The graphene oxide thus obtained was subjected to matrix-assisted laser desorption ionization (MALDI) and Fourier transform ion cyclotron resonance mass spectrometry (FT-ICR-MS analysis) using Solarix manufactured by Bruker Daltonics. The results are illustrated in FIG. 1. From FIG. 1, it has been confirmed that the chemical species of graphene oxide in the vicinity of the maximum peak (molecular weight of around 2,000) is [C$_8$O$_4$H$_3$]12.3.

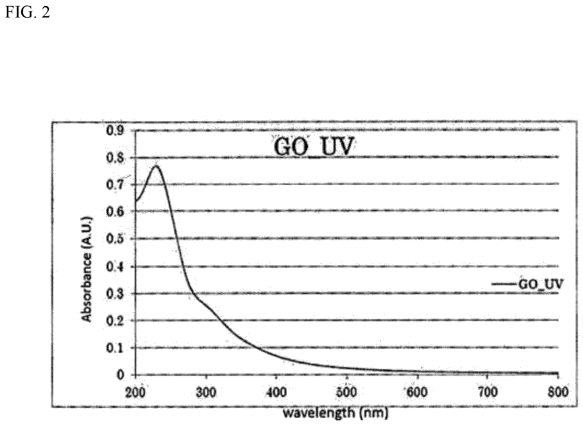

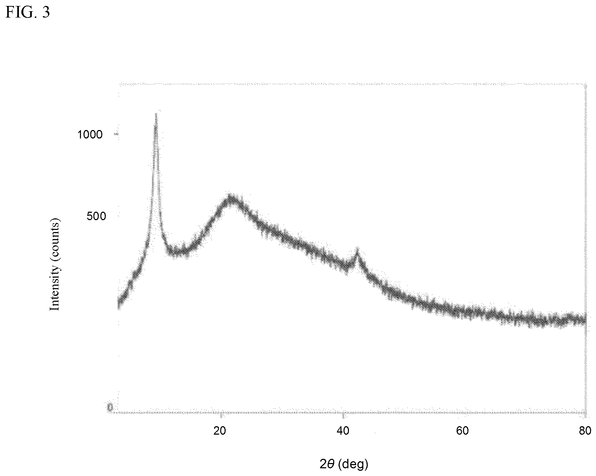

The ultraviolet-visible absorption spectrum (UV/VIS/NIR Spectrophotometer V-570 manufactured by JASCO Corporation) of the graphene oxide thus obtained is illustrated in FIG. 2 and the results of X-ray powder diffraction (desktop X-ray diffraction instrument MiniFlex 600 manufactured by Rigaku Corporation) measurement therefor is illustrated in FIG. 3.

[Example 1] Synthesis of cobalt compound-graphene oxide composite

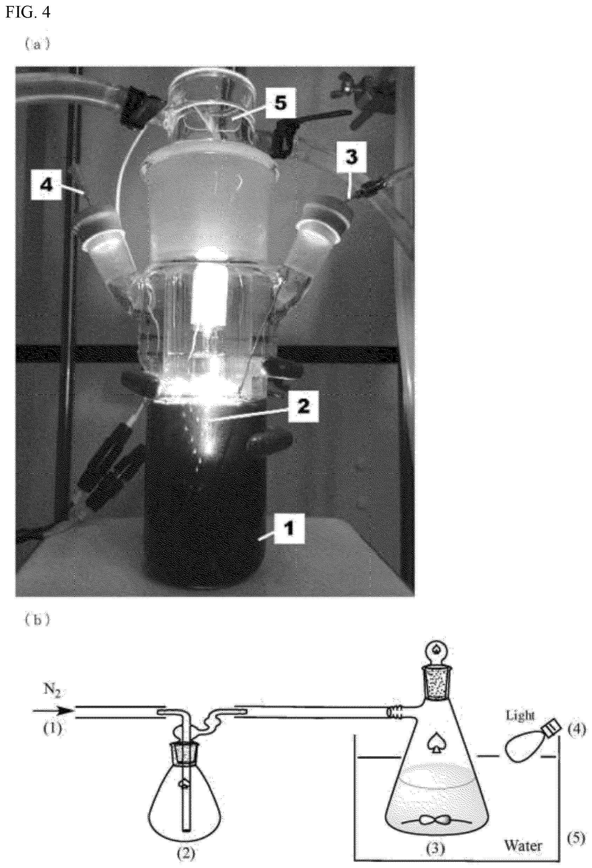

A cobalt compound-graphene oxide composite was synthesized using the apparatus having the configuration illustrated in FIG. 4(a). As illustrated in FIG. 4(a), a hard glass container (1) is equipped with a stirrer and an inlet (3) and an outlet (4) of inert gas. In addition, a 100 W high pressure mercury lamp (HL100CH-4 manufactured by SEN LIGHTS Corporation) (2) covered with a quartz glass cooling jacket (5) is equipped inside the hard glass container (1). A circulation type cooling device is connected to the cooling jacket (5), and cooling water flows through the cooling jacket (5).

The interior of the container (1) was set to a nitrogen gas atmosphere, cobalt acetate tetrahydrate (0.50 g) was added to a suspension of the graphene oxide (0.50 g) obtained above and a 50% aqueous ethanol solution, and the mixture was stirred at room temperature (25 °C) for 10 minutes. Next, the suspension was irradiated with light using a high pressure mercury lamp (2) (2 hours) while allowing nitrogen gas to bubble therein. The wavelength of the irradiation light is from 180 to 600 nm. In addition, cooling water at 30 °C was allowed to continuously flow through the cooling jacket (5) during the light irradiation. The suspension was changed from brown to black by light irradiation. Next, the reaction solution thus obtained was filtered, thereby obtaining a black solid. This black solid was washed with water and ethanol and then dried under reduced pressure using a desiccator, thereby obtaining a cobalt compound-graphene oxide composite (black powder, 0.43 g).

[Example 2] Synthesis of nickel compound-graphene oxide composite

A nickel compound-graphene oxide composite was synthesized using an apparatus having the same configuration as that in Example 1. The interior of the container (1) was set to a nitrogen gas atmosphere, nickel acetate tetrahydrate (0.50 g) was added to a suspension of graphene oxide (0.50 g) obtained by the method of [Synthesis Example] described above and a 50% aqueous ethanol solution, and the mixture was stirred at room temperature (25 °C) for 10 minutes. Next, the suspension was irradiated with light using a high pressure mercury lamp (2) (2 hours) while allowing nitrogen gas to bubble therein. The wavelength of the irradiation light is from 180 to 600 nm. In addition, cooling water at 30 °C was allowed to continuously flow through the cooling jacket (5) during the light irradiation. The suspension was changed from brown to black by light irradiation. Next, the reaction solution thus obtained was filtered, thereby obtaining a black solid. This black solid was washed with water and ethanol and then dried under reduced pressure using a desiccator, thereby obtaining a nickel compound-graphene oxide composite (black powder, 0.43 g).

[Example 3] Synthesis of molybdenum compound-graphene oxide composite

A molybdenum compound-graphene oxide composite was synthesized using an apparatus having the same configuration as that in Example 1. The interior of the container (1) was set to a nitrogen gas atmosphere, the graphene oxide (0.30 g) obtained above was added to an aqueous solution ($100 \text{ cm}^3$) of ammonium tetrathiomolybdate $(NH_4)_2MoS_4$ (0.30 g), and the mixture was stirred at room temperature (25 °C) for 10 minutes. Next, the suspension was irradiated with light using the high pressure mercury lamp (2) (4 hours) while allowing nitrogen gas to bubble therein. The wavelength of the irradiation light is from 180 to 600 nm. In addition, cooling water at 30 °C was allowed to continuously flow through the cooling jacket (5) during the light irradiation. The suspension was changed from brown to black by light irradiation. Next, the reaction solution thus obtained was filtered, thereby obtaining a black solid. This black solid was washed with water and ethanol and then dried under reduced pressure using a desiccator, thereby obtaining a molybdenum compound-graphene oxide composite (black powder, 0.31 g).

[Reference Example] Synthesis of iron compound-graphene oxide composite

An iron compound-graphene oxide composite was synthesized using an apparatus having approximately the same configuration as that in Example 1. As illustrated in FIG. 4(b), in the reaction apparatus used, a hard glass container (3) is equipped with a nitrogen gas supply line with bubbler (1), a back flow stopper (2) for reaction solution, a stirrer, an inert gas inlet, and an outlet. In addition, a mercury lamp with quartz jacket (USHIO450W high pressure mercury lamp (4)) and a water bath with circulation type cooling device (5) are equipped outside the hard glass container (3). The interior of the container (3) was set to a nitrogen gas atmosphere, the graphene oxide (0.18 g) obtained above and Fe(CO)s (0.18 g) were added to tetrahydrofuran (THF, $20 \text{ cm}^3$, deoxygenated), and the mixture was stirred at room temperature (25 °C) for 10 minutes. Next, the suspension was irradiated with light using the high pressure mercury lamp (4) (1.5 hours) while allowing nitrogen gas to bubble therein. The wavelength of the irradiation light is from 260 to 600 nm. In addition, the container (3) was cooled from the outside using the water bath with circulation type cooling device (5). The temperature of the water bath was kept at 30 °C. The suspension was changed from brown to black by light irradiation. Next, the reaction solution thus obtained was filtered in a nitrogen gas atmosphere, thereby obtaining a black solid. This black solid was washed with THF ($10 \text{ cm}^3$), dichloromethane ($10 \text{ cm}^3$), and ether ($10 \text{ cm}^3$) and then dried under reduced pressure, thereby obtaining an iron compound-graphene oxide composite (black powder, 0.16 g).

<Measurement of infrared absorption spectrum>

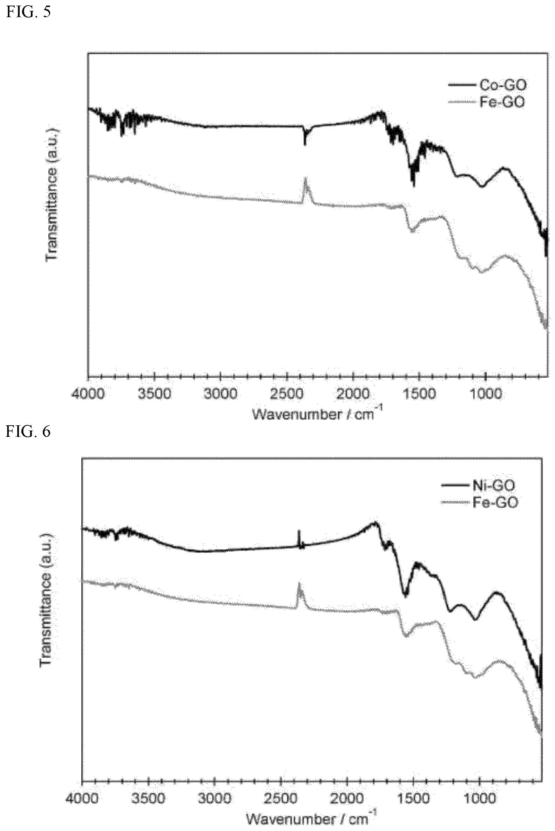

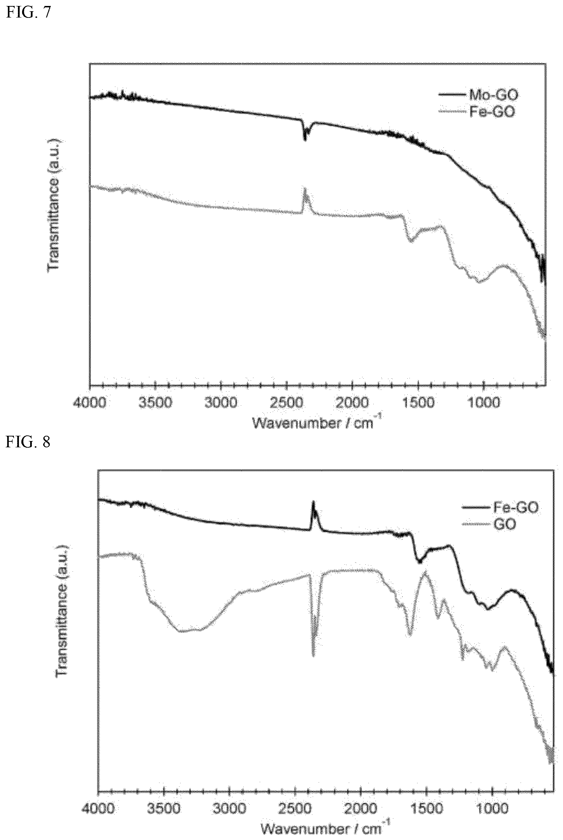

The infrared absorption spectrum (IR) of each of the metal compound-graphene oxide composites obtained in Examples 1 to 3 and the reference example was measured by ATR method using FT-IR Spectrometer FT/IR-6200 (manufactured by JASCO Corporation). The infrared absorption spectrum of the cobalt compound-graphene oxide composite (Co-GO) obtained in Example 1 is illustrated in FIG. 5. The infrared absorption spectrum of the nickel compound-graphene oxide composite (Ni-GO) obtained in Example 2 is illustrated in FIG. 6. The infrared absorption spectrum of the molybdenum compound-graphene oxide composite (Mo-GO) obtained in Example 3 is illustrated in FIG. 7. In addition, the infrared absorption spectrum of the graphene oxide (GO) obtained above is illustrated in FIG. 8. Incidentally, the infrared absorption spectrum of the iron compound-graphene oxide composite (Fe-GO) obtained in the reference example is concurrently illustrated in FIGs. 5 to 8.

Incidentally, in the spectra of Co-GO, Ni-GO, Mo-GO, and Fe-GO illustrated in FIGs. 5 to 7, broad absorption at from 3800 to 3000 $\text{cm}^{-1}$ attributed to an O-H group and absorption at around 1700 $\text{cm}^{-1}$ attributed to a C=O group, which have been confirmed in the infrared absorption spectrum (FIG. 8) of graphene oxide as a raw material, have disappeared. From this, it can be seen that the carboxyl group and hydroxyl group of graphene oxide as a raw material have been eliminated in each of the composites obtained in Examples 1 to 3 and the reference example. In addition, absorption at from 930 to 1310 $\text{cm}^{-1}$ attributed to a C-O group is present in the spectra of Co-GO and Ni-GO. From this, it can be seen that the C-O group of graphene oxide as a raw material remains in the composite of a cobalt compound and the composite of a nickel compound. Meanwhile, absorption at from 930 to 1310 $\text{cm}^{-1}$ attributed to a C-O group has disappeared in the composite of a molybdenum compound. In addition, it can be seen that absorption attributable to a bond between graphene oxide and cobalt, nickel, or molybdenum via an oxygen atom is absent.

<Measurement of X-ray powder diffraction>

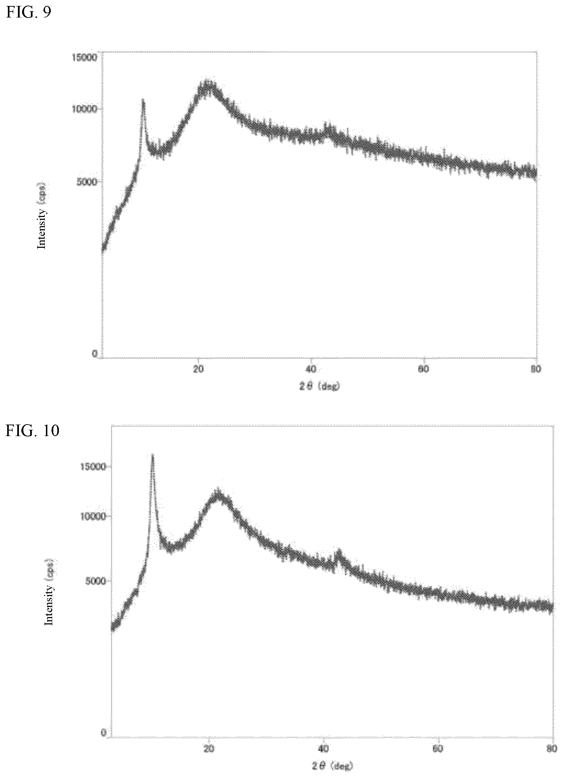

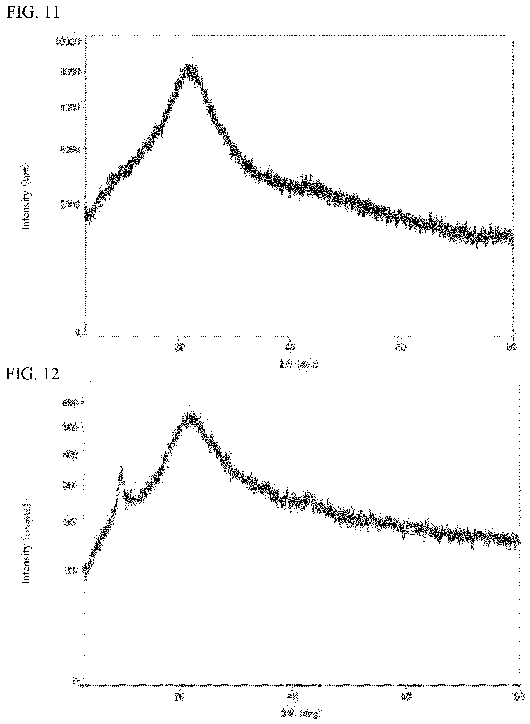

Each of the metal compound-graphene oxide composites obtained in Examples 1 to 3 and the reference example was subjected to the X-ray powder diffraction (XRD) measurement using a desktop X-ray diffraction instrument MiniFlex 600 (manufactured by Rigaku Corporation). The XRD spectrum of the cobalt compound-graphene oxide composite (Co-GO) obtained in Example 1 is illustrated in FIG. 9. The XRD spectrum of the nickel compound-graphene oxide composite (Ni-GO) obtained in Example 2 is illustrated in FIG. 10. The XRD spectrum of the molybdenum compound-graphene oxide composite (Mo-GO) obtained in Example 3 is illustrated in FIG. 11. The XRD spectrum of the iron compound-graphene oxide composite obtained in the reference example is illustrated in FIG. 12.

As is apparent from the XRD spectra illustrated in FIGs. 9, 10, and 12, it can be seen that each of the metal compound-graphene oxide composites obtained in Examples 1 and 2 and the reference example had a relatively sharp signal at $2\theta = 9.65°$ and the interlayer order of graphene oxide is partially maintained. Meanwhile, in FIGs. 9 to 12, structural diffraction signals attributed to metal compounds of cobalt, nickel, molybdenum, and iron have not appeared. From this, it can be seen that most of these metal compounds are supported on graphene oxide as nanoparticles of about 3 nm or less. Incidentally, from the comparison of powder X-ray diffraction measurement results, it can also be seen that the graphene oxides in these composites are all changed to be more amorphous than the graphene oxide used as a raw material.

<Analysis by scanning electron microscopy with energy dispersive spectroscopy>

The surface of each of the metal compound-graphene oxide composites obtained in Examples 1 to 3 was subjected to the observation of SEM images and mapping images of the respective atoms and the elemental analysis using a scanning electron microscope SU6600 manufactured by Hitachi High-Technologies Corporation and an attachment device (Bruker ASX QUANTAX XFlash 5060FQ: energy dispersive spectroscopy) manufactured by Bruker. The samples were all attached to a carbon tape and subjected to the measurement.

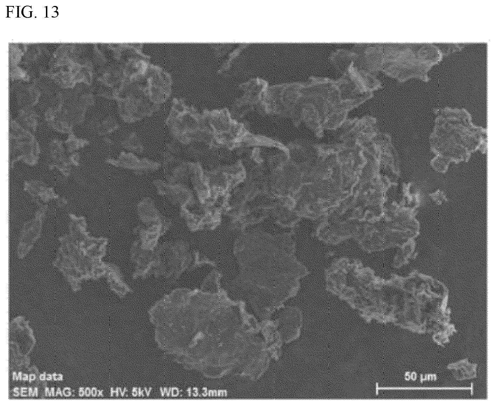

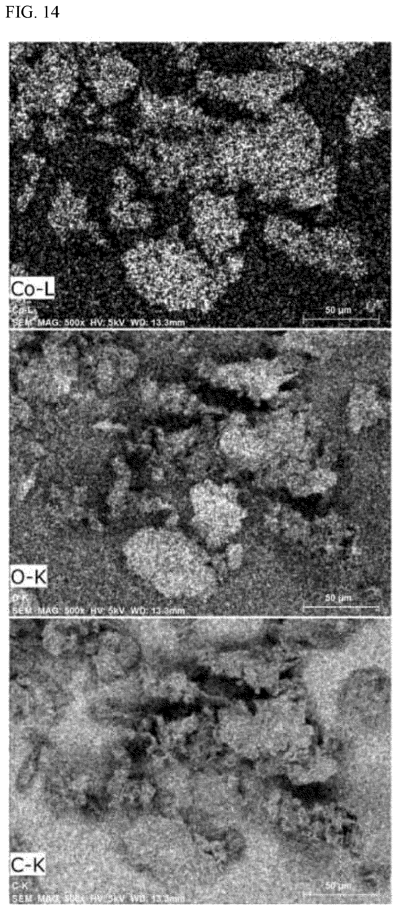

A SEM image of the cobalt compound-graphene oxide composite obtained in Example 1 is illustrated in FIG. 13. In addition, a mapping image (Co-L) of cobalt atoms (incidentally, the portion displayed in white is the place at which cobalt atoms are present), a mapping image (O-K) of oxygen atoms (incidentally, the portion displayed in white is the place at which oxygen atoms are present), and the mapping image (C-K) of carbon atoms (incidentally, the portion displayed in white is the place at which carbon atoms are present) are illustrated in FIG. 14 side by side.

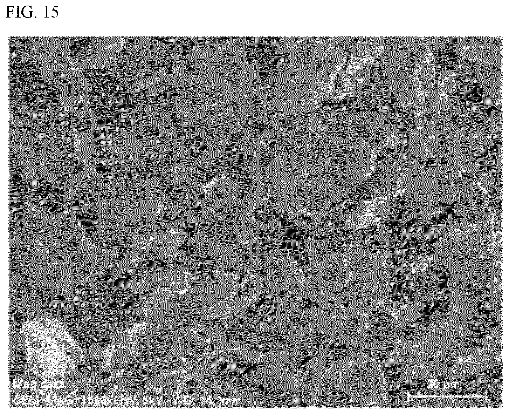

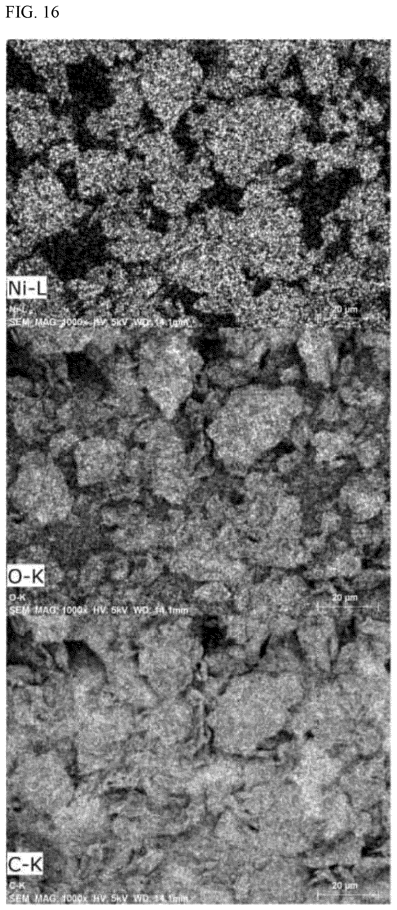

A SEM image of the nickel compound-graphene oxide composite obtained in Example 2 is illustrated in FIG. 15. In addition, a mapping image (Ni-L) of nickel atoms (incidentally, the portion displayed in white is the place at which nickel atoms are present), a mapping image (O-K) of oxygen atoms (incidentally, the portion displayed in white is the place at which oxygen atoms are present), and the mapping image (C-K) of carbon atoms (incidentally, the portion displayed in white is the place at which carbon atoms are present) are illustrated in FIG. 16 side by side.

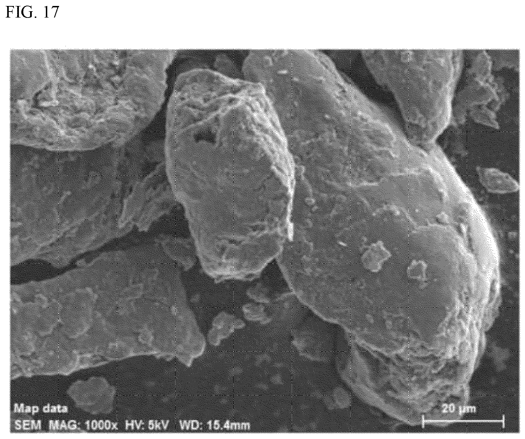

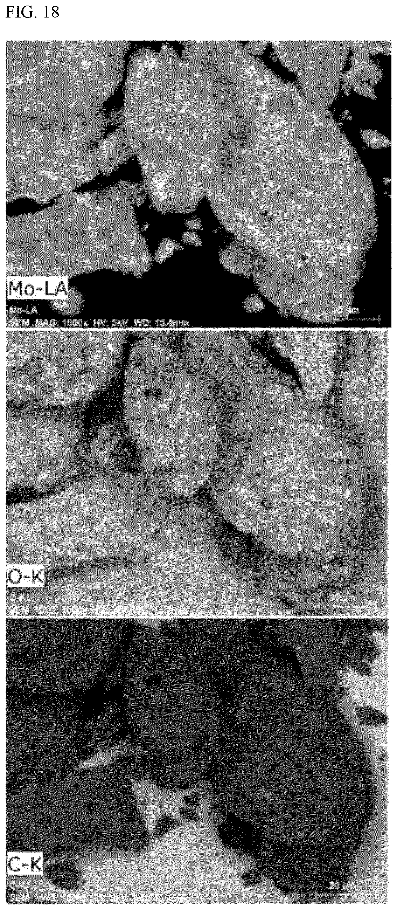

A SEM image of the molybdenum compound-graphene oxide composite obtained in Example 3 is illustrated in FIG. 17. In addition, mapping images (Mo-LA, S-KA) of molybdenum atoms and sulfur atoms (incidentally, the portion displayed in white is the place at which molybdenum atoms and sulfur atoms are present), a mapping image (O-K) of oxygen atoms (incidentally, the portion displayed in white is the place at which oxygen atoms are present), and the mapping image (C-K) of carbon atoms (incidentally, the portion displayed in white is the place at which carbon atoms are present) are illustrated in FIG. 18 side by side.

In addition, the composition of each of the metal compound-graphene oxide composites obtained in Examples 1 to 3 was measured by elemental analysis by scanning electron microscopy with energy dispersive spectroscopy (SEM/EDX). As a result, C was 60.79 mass%, O was 34.88 mass%, Co was 3.87 mass%, and S was 0.46 mass% in the cobalt compound-graphene oxide composite obtained in Example 1. In addition, C was 56.50 mass%, O was 36.61 mass%, Ni was 6.12 mass%, and S was 0.77 mass% in the nickel compound-graphene oxide composite obtained in Example 2. In addition, C was 22.43% mass%, O was 16.40% mass%, and Mo and S was 59.69% mass% in the molybdenum compound-graphene oxide composite obtained in Example 3. Incidentally, sulfur (S) is an impurity contained in graphene oxide. In EDX, the Mo content cannot be determined since the peak positions of Mo and S overlap each other, but the presence of Mo is confirmed from the fact that subpeaks of Mo are present.

<Analysis by transmission electron microscopy with energy dispersive spectroscopy>

The surface of each of the metal compound-graphene oxide composites obtained in Examples 1 to 3 was observed by energy dispersive spectroscopy (TEM/EDX) using JEOL, FEG transmission electron microscope (300 kV) manufactured by JEOL Ltd..

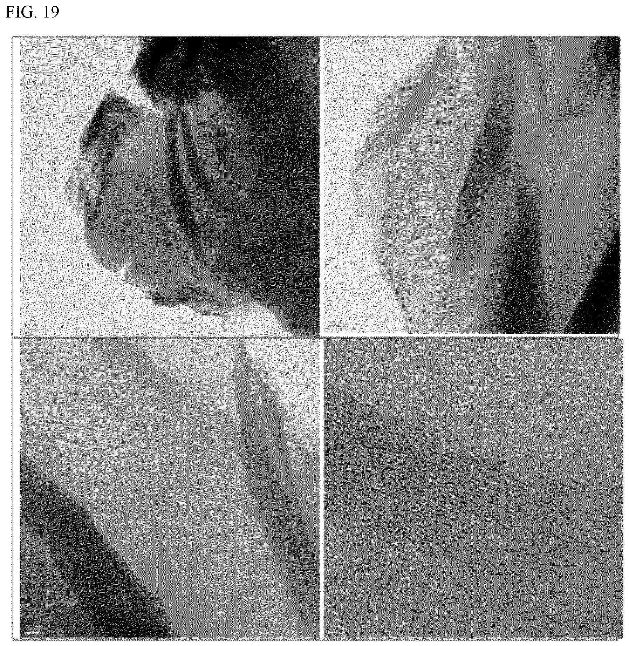

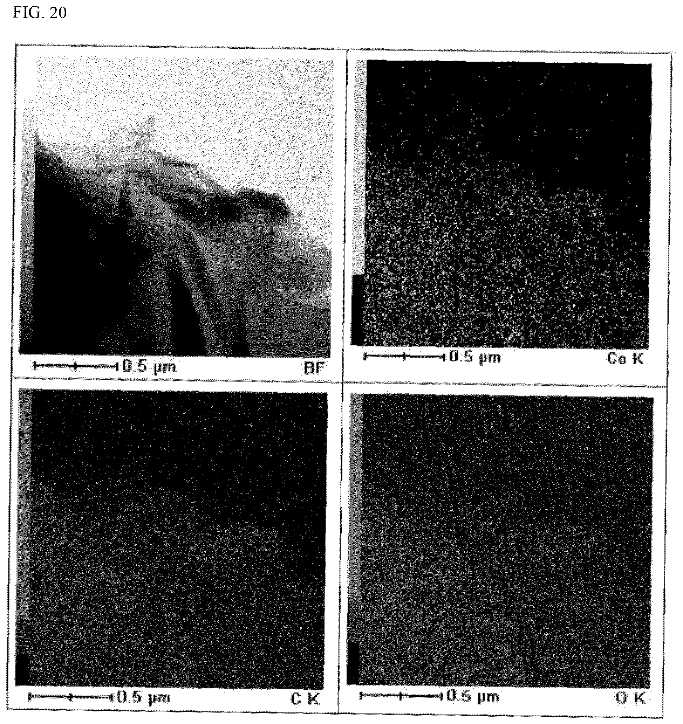

The respective TEM images of the cobalt compound-graphene oxide composite obtained in Example 1 at four magnifications are illustrated in FIG. 19. In addition, a TEM image (BF), a mapping image (Co K) of cobalt atoms, a mapping image (O K) of oxygen atoms, and a mapping image (C K) of carbon atoms are illustrated in FIG. 20 side by side.

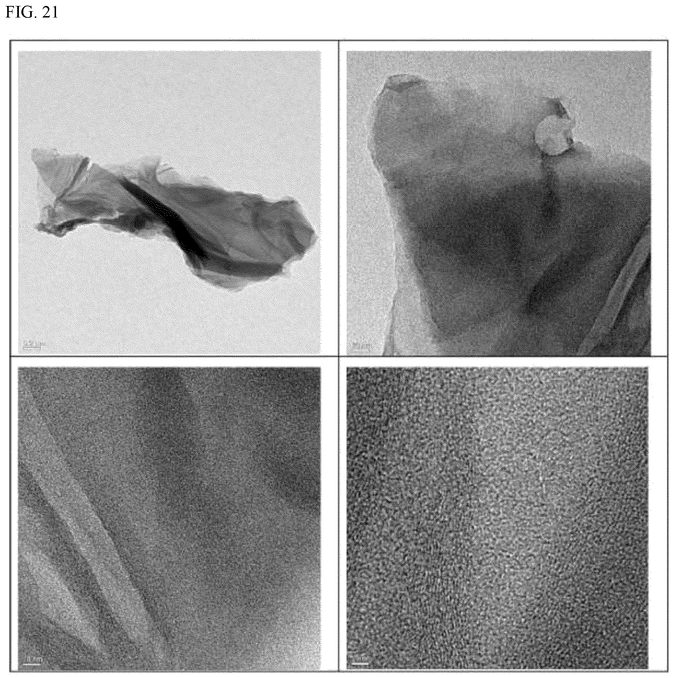

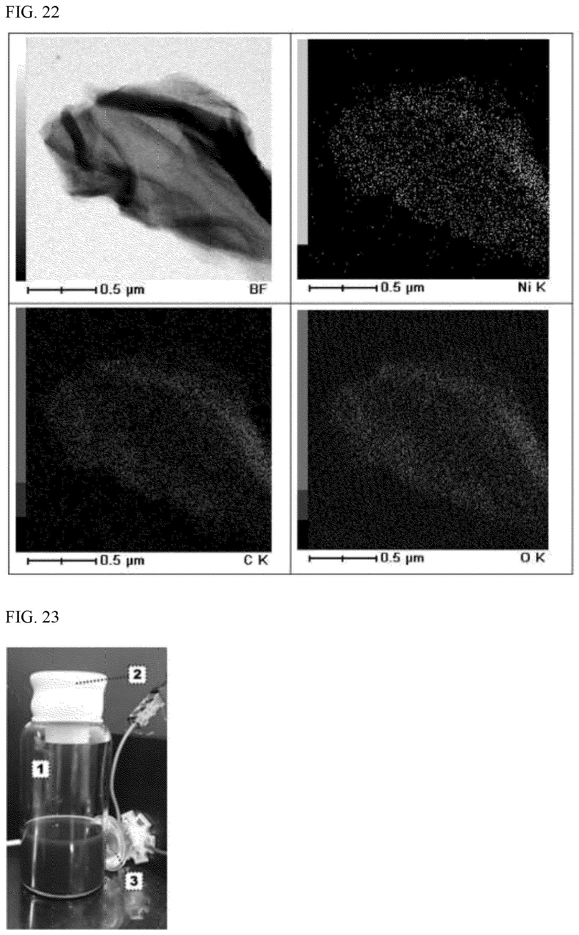

The respective TEM images of the nickel compound-graphene oxide composite obtained in Example 2 at four magnifications are illustrated in FIG. 21. In addition, a TEM image (BF), a mapping image (Co K) of cobalt atoms, a mapping image (O K) of oxygen atoms, and a mapping image (C K) of carbon atoms are illustrated in FIG. 22 side by side.

From FIG. 13 to FIG. 22, it can be seen that cobalt atoms and oxygen atoms, nickel atoms and oxygen atoms, or molybdenum atoms, sulfur atoms and oxygen atoms are supported on graphene oxide by being highly uniformly dispersed on the surface thereof in each of the metal compound-graphene oxide composites obtained in Examples 1 to 3. In addition, it can be seen that a great number of the particle sizes of the respective metal compounds are about 3 nm or less.

[Example 4] Production of hydrogen

Hydrogen was produced from water and ethanol using each of the metal compound-graphene oxide composites obtained in Examples 1 to 3 and the reference example as a photocatalyst. As the reaction apparatus, the apparatus illustrated in the photograph of FIG. 23 was used. This apparatus is equipped with a vial [1] (30 cm$^3$) with a septum stopper [2] and a white LED [3] (OSW4XME3CIE, Optosupply).

First, each (1.5 mg) of the metal compound-graphene oxide composites obtained in Examples 1 to 3 and the reference example, fluorescein (6.6 mg), triethylamine (5% v/v), and ethanol and water (volume ratio of ethanol to water = 1 : 1) were mixed together (Mixed Solution AI). Mixed Solution AI (10 cm$^3$) was placed in the vial (30 cm$^3$), and this vial was sealed with the septum stopper and irradiated with light from the white LED (OSW4XME3CIE, Optosupply) at 20 °C while stirring Mixed Solution AI using a stirrer. After light irradiation, the gas in the space in the vial was sampled by 0.1 cm$^3$ using a gas tight syringe at regular intervals (after 1.5 hours, after 3 hours, after 4.5 hours, after 6 hours, after 8 hours, after 15 hours, and after 21.5 hours), and the amount of hydrogen in the gas sampled was quantified by gas chromatography (apparatus: GC-3200 manufactured by GL Science Inc., column: Molecular Sieve 13X 60/80 manufactured by GL Sciences Inc., outer diameter = 1/8 inch, inner diameter = 2.2 mm, length = 4 m, column temperature : 60 °C, TCD temperature: 60 °C, injector temperature: 60 °C, carrier gas: nitrogen gas, TCD current: 60 mA, and column pressure: 200 kPa). The volume of the space in the vial (the volume of the vial excluding the septum stopper and the solution) was 20 cm$^3$, and thus the relation between the light irradiation time and the total amount of hydrogen generated was calculated by the following equation. Incidentally, the change in pressure in the vial due to gas generation was ignored when converting the peak area on the gas chromatograph into the volume of hydrogen.

$$(\text{Amount of hydrogen in gas sampled}) \times 200 \approx (\text{total amount of hydrogen generated from system})$$

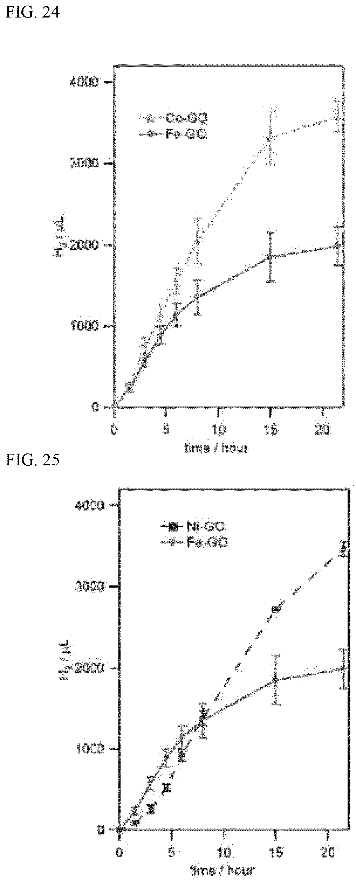

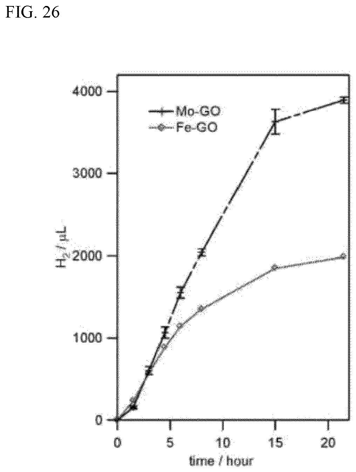

A graph showing the relation between the light irradiation time and the total amount of hydrogen generated in the case of using the cobalt compound-graphene oxide composite (Co-GO) obtained in Example 1 is illustrated in FIG. 24. A graph showing the relation between the light irradiation time and the total amount of hydrogen generated in the case of using the nickel compound-graphene oxide composite obtained in Example 2 is illustrated in FIG. 25. A graph showing the relation between the light irradiation time and the total amount of hydrogen generated in the case of using the molybdenum compound-graphene oxide composite obtained in Example 3 is illustrated in FIG. 26. In addition, a graph showing the relation between the light irradiation time and the total amount of hydrogen generated in the case of using the iron compound-graphene oxide composite (Fe-GO) obtained in the reference example are concurrently illustrated in FIG. 24 to FIG. 26. In addition, in the graphs illustrated in FIG. 24 to FIG. 26, the average value of the results obtained by three or four times of experiment is illustrated together with the standard error.

From the results illustrated in FIGs. 24 to 26, it can be seen that the respective metal compound-graphene oxide composites of the present invention are excellent as a photocatalyst for hydrogen generation.

Claims

1. A metal compound-graphene oxide composite which is a composite of at least one metal compound selected from the group consisting of a cobalt compound, a nickel compound, and a molybdenum compound and graphene oxide, wherein
absorption attributed to a C-O group is present but absorption attributed to an O-H group and a C=O group and absorption attributed to a bond between graphene oxide and cobalt or nickel via an oxygen atom are substantially absent in an infrared absorption spectrum of the composite in a case in which the metal compound includes a cobalt compound or a nickel compound, and

absorption attributed to a C-O group, an O-H group, and a C=O group and absorption attributed to a bond between graphene oxide and molybdenum via an oxygen atom are all substantially absent in an infrared absorption spectrum of the composite in a case in which the metal compound is a molybdenum compound.

2. The metal compound-graphene oxide composite according to claim 1, wherein the metal compound has a particle size of 10 nm or less.

3. The metal compound-graphene oxide composite according to claim 1 or 2, wherein a content of cobalt, nickel, and molybdenum calculated from an elemental analysis measurement result on a surface of the metal compound-graphene oxide composite by scanning electron microscopy with energy dispersive spectroscopy is from 0.1 to 50 mass%.

4. The metal compound-graphene oxide composite according to any one of claims 1 to 3, wherein a primary particle size is 100 $\mu$m or less.

5. The metal compound-graphene oxide composite according to any one of claims 1 to 4, wherein the composite substantially does not have a signal based on a crystal of a metal or a metal compound at $2\theta = 30°$ or more in X-ray powder diffraction measurement.

6. The metal compound-graphene oxide composite according to any one of claims 1 to 5, wherein the cobalt compound is cobalt oxide, the nickel compound is nickel oxide, and the molybdenum compound is a chalcogen compound of molybdenum.

7. A method for producing a composite of at least one metal compound selected from the group consisting of a cobalt compound, a nickel compound, and a molybdenum compound and graphene oxide, the method comprising:

a step of preparing a suspension by mixing at least one metal compound raw material selected from the group consisting of a cobalt compound, a nickel compound, and a molybdenum compound and graphene oxide as raw materials in an inert solvent; and
a step of irradiating the suspension with light having a wavelength in a range of from 100 nm to 800 nm.

8. The method for producing a composite according to claim 7, wherein
the cobalt compound as a raw material is at least one of a salt of cobalt with an inorganic acid, a salt of cobalt with a carboxylic acid, a salt of cobalt with a sulfonic acid, cobalt hydroxide, a double salt of cobalt, or a complex of cobalt, the nickel compound as a raw material is at least one of a salt of nickel with an inorganic acid, a salt of nickel with a carboxylic acid, a salt of nickel with a sulfonic acid, nickel hydroxide, a double salt of nickel, or a complex of nickel, and the molybdenum compound as a raw material is at least one of a salt of molybdenum with an inorganic acid, a salt of molybdenum with carboxylic acid, a salt of molybdenum with a sulfonic acid, molybdenum hydroxide, a double salt of molybdenum, a complex of molybdenum, or a salt of molybdenum with sulfur.

9. A photocatalyst comprising the metal compound-graphene oxide composite according to any one of claims 1 to 6.

10. A method for producing hydrogen, comprising a step of irradiating a hydrogen source containing at least either of water or an alcohol with light in presence of the metal compound-graphene oxide composite according to any one of claims 1 to 6.

11. The method for producing hydrogen according to claim 10, wherein at least either of sunlight or light from a white LED is used as the irradiation light.

12. An apparatus for producing hydrogen, comprising the metal compound-graphene oxide composite according to any one of claims 1 to 6 as a catalyst.

FIG. 1

FIG. 2

FIG. 3

FIG. 4

(a)

(b)

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

## INTERNATIONAL SEARCH REPORT

International application No.

PCT/JP2017/036218

### A. CLASSIFICATION OF SUBJECT MATTER

Int.Cl. B01J35/02(2006.01)i, B01J23/75(2006.01)i, B01J23/755(2006.01)i,
B01J27/051(2006.01)i, B01J37/34(2006.01)i, C01B3/04(2006.01)i,
C01B3/22(2006.01)i, C01B32/198(2017.01)i

According to International Patent Classification (IPC) or to both national classification and IPC

### B. FIELDS SEARCHED

Minimum documentation searched (classification system followed by classification symbols)

Int.Cl. B01J35/02, B01J23/75, B01J23/755, B01J2/051, B01J37/34, C01B3/04,
C01B3/22, C01B32/198

Documentation searched other than minimum documentation to the extent that such documents are included in the fields searched

| | |
|---|---|
| Published examined utility model applications of Japan | 1922–1996 |
| Published unexamined utility model applications of Japan | 1971–2017 |
| Registered utility model specifications of Japan | 1996–2017 |
| Published registered utility model specifications of Japan | 1994–2017 |

Electronic data base consulted during the international search (name of data base and, where practicable, search terms used)

CAplus (STN), JSTPlus (JDreamIII), JST7580 (JDreamIII), JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| X | US 2012/0265122 A1 (M. SAMY EL-SHALL) 18 October 2012, | 1–8 |
| Y | claims, paragraphs [0002], [0042]–[0167], drawing & WO 2011/072213 A2 | 1–12 |
| Y | KR 10-2012-0109187 A (JEJU NATIONAL UNIVERSITY INDUSTRY-ACADEMIC COOPERATION FOUNDATION) 08 October 2012, claims, examples (Family: none) | 1–12 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 November 2017 (20.11.2017) | 05 December 2017 (05.12.2017) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2017/036218 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | X. ZONG, et al., Enhancement of Photocatalytic $H_2$ Evolution on CdS by Loading $MoS_2$ as Cocatalyst under Visible Light Irradiation, J. Am. Chem. Soc., 2008, 130, 7176-7177. page 7176, left column, paragraph [0002] to page 7177, right column, paragraph [0001] | 1-12 |
| P, A | WO 2016/158806 A1 (FUJI CHEMICAL INDUSTRIES CO., LTD.) 06 October 2016, entire text (Family: none) | 1-12 |
| P, A | A. AL-NAFIEY, et al., Nickel oxide nanoparticles grafted on reduced graphene oxide (rGO/NiO) as efficient photocatalyst for reduction of nitroaromatics under visible light irradiation, Journal of Photochemistry and Photobiology A: Chemistry, 2017, 336, 198-207., Available online 3 January 2017. entire text | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012245469 A

**Non-patent literature cited in the description**

- *Advanced Materials,* 2013, vol. 25, 3820-3839
- *Scientific Reports,* 2015, vol. 5, 7629
- *Journal of Materials Chemistry A,* 2015, vol. 3, 15962-15968